(19) Europäisches Patentamt
European Patent Office
Office européen des brevets

(11) **EP 3 129 752 B1**

(12) **EUROPEAN PATENT SPECIFICATION**

(45) Date of publication and mention
of the grant of the patent:
**09.12.2020 Bulletin 2020/50**

(51) Int Cl.:
*G01F 1/66* (2006.01)     *G05D 7/06* (2006.01)
*F16K 1/22* (2006.01)     *F16K 37/00* (2006.01)
*F24F 11/74* (2018.01)     *G01F 15/18* (2006.01)
*F24F 13/14* (2006.01)

(21) Application number: **15717088.7**

(22) Date of filing: **07.04.2015**

(86) International application number:
**PCT/DK2015/050079**

(87) International publication number:
**WO 2015/154777 (15.10.2015 Gazette 2015/41)**

(54) **SYSTEM FOR CONTROL OF INLET AIR**

SYSTEM ZUR STEUERUNG DER EINLASSLUFT

SYSTÈME DE COMMANDE DE L'AIR D'ADMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.04.2014 DK 201470179**

(43) Date of publication of application:
**15.02.2017 Bulletin 2017/07**

(73) Proprietor: **Lindab AB
269 82 Bastad (SE)**

(72) Inventors:
• **HANSEN, Henning Max
DK-6400 Sønderborg (DK)**

• **SCHMIDT-HANSEN, Hans
DK-6100 Haderslev (DK)**

(74) Representative: **Zacco Sweden AB
P.O. Box 5581
114 85 Stockholm (SE)**

(56) References cited:
**EP-A2- 0 462 432          WO-A1-2010/122117
DE-A1- 3 432 494          DE-A1- 10 001 165
DK-B1- 177 567            JP-A- 2001 133 305
US-A1- 2007 099 556      US-A1- 2013 068 313**

EP 3 129 752 B1

## Description

### Field of the Invention

The present invention relates to a system for control of a flow of a media in a duct, which duct comprises means for flow measurement, which duct comprises means for flow regulation, which system comprises a control system, which control system receives at least input from the flow measurement, which control system controls at least one regulation damper.

### Background of the Invention

The granted Danish patent PA 2012 70241 discloses a system and a method for measuring flow in a flow duct, comprising at least two ultra sound transducers. It is the object of this Danish patent application to measure the flow of air in a duct by one or more transducers transmitting beams of ultra sound controlled by a microcontroller based electronic system. The object can be achieved if the microcontroller stores a vector of data samples for each direction of transmission, which vector comprises an appropriate number of N samples forming a frame, which microcontroller multiply each value of the frame which a complex number, which microcontroller based on the result calculates the flow in the duct. By the invention according to the present patent application an efficient flow measurement of air flowing in a duct can be achieved.

DE10001165A1 discloses a system for controlling the flow of media in a duct, wherein the controller, pressure sensors and signalling lines are arranged on a printed circuit board. However the position detection means is located at the damper location, leading to a less compact system.

### Object of the Invention

It is the object of the pending patent application to achieve an effective control of inlet air in a heating or air condition systems in buildings. A further object of the invention is to control the air flow in every air inlet in a building.

### Description of the Invention

The object can be achieved by a system as disclosed in claim The flow measurement and the damper control are performed by a common control system, which control system comprises at least one common printed board, which printed board comprises at least one processor, which printed board further comprises a magnetic position detection means for detecting the actual position of the damper by means of at least one magnet on the damper, with the magnetic position detection means being placed on the printed circuit board.

Hereby can be achieved that all electronic functions necessary for control the inlet flow of air can be achieved at one common electronic circuit placed on one single printed board. It is further possible that a common processor takes care of flow calculation and also takes care of damper regulation. In that way highly effective control of the inlet air can be achieved. Actual flow is measured and if a difference to a fixed value exists then a damper can be adjusted so that the correct air flow is achieved. By continuously measuring air flow it is possible even to adjust a flow level into what is necessary in an office or a room. Especially in large air condition systems in large buildings it is important that the inlet in each single air inlet is under control. The air flow is probably generated by one or more large blowing means and then is more or less a common air flow sent through relative large ducts towards different inlet openings. In uncontrolled situations changes in air flow from one outlet, maybe by manual adjustment, will have some influence at the air flow in other parts of the same system. Therefore in a traditional air condition system the air flow into each single air inlet is adjusted once and any adjustment according to the actual demand because of changes of the atmosphere of a room is difficult to achieve. By the pending application where also the flow is measured and the damper can adjust the actual flow it is possible by communication from the common processor towards a central control system to directly inform the need for actual air in the room at a sufficient moment. Therefore, a background system that comprises larger air blow systems can get information of the demand for air flow for each single outlet and it is possible also to control the larger system and thereby increase the effectivity and reduce the energy consumption.

In a preferred embodiment for the invention can the means for flow measurement comprise at least a pair of ultrasound transducers for generating at least one path of ultrasound partly in the flow direction and partly against the flow direction in a channel. Flow measurement performed by ultrasonic method is one of the more effective ways of measuring air flow. Especially by using a path first in one direction and then in the second opposite direction it is possible by measurement of the difference in time delay to achieve information about a flow velocity. Depending on the size of the duct it can be possible to use a plurality of ultrasonic transducers and then generate a number of tracks of ultrasound in order to measure the flow in different areas of a duct.

Hereby a better result by non-linear flow can be achieved.

By a further preferred embodiment for the invention can the ultra sound transducers be connected to a transmitter circuit and to a receiver circuit, which receiver circuit comprises at least a band pass filter, which band pass filter is further connected to a microcontroller, which microcontroller comprises either internally or externally an analogue to digital converter, which digital converter converts the analogue signal into digital data samples representing at least transit times and time difference, which microcontroller stores the data samples in a memory, whereby a transmitter circuit and a receiver circuit are controlled by a switch, which switch perform continuous switching of transmitter circuit into a receiver circuit and the receiver circuit into a transmitter circuit, which microcontroller stores a vector of data sample for each direction of transmission, which vector comprises an appropriate number of N samples forming a frame, which microcontroller multiply each value of the frame with a complex number with fixed magnitude and a phase representing the transmitted frequency corresponding to the transmitted signal:

$$Y_n = X_n \cdot e^{j\omega \cdot t_s \cdot n} = X_n \cdot \left( \cos(\omega \cdot t_s \cdot n) + j\sin(\omega \cdot t_s \cdot n) \right)$$

where $X_n$ is the stored value at the $n^{th}$ location, $j\omega$ the angular frequency of the transmitted signal, $t_s$ the sampling time interval and $n$ is the sample number $0 \leq n < N$, which microprocessor generates imaginary values and a real values, which imaginary values and real values are low pass filtrated in a digital filter, which filtrated values are sent to an amplitude function and to a phase detection function, which microcontroller based on the result of the amplitude function and the result of the phase detection function calculates the flow in the duct. In this way an effective measurement of the flow can be achieved. Most of the calculations can be made in an algorithm which is programmed into the processor. Because calculations are the same each time measurement is performed a single algorithm that has to be run through by the processor is able by relatively short time intervals to calculate the flow. In fact will a relative simple processor have a capacity that is much higher than necessary. Further it can be achieved by an algorithm that is performing calculation as shown above gives the result that a very precise measurement of actual flow is achieved in the duct.

By a further preferred embodiment for the invention can the position detection means for detecting the actual position of the damper be achieved by a rotatable shaft carrying the damper, which shaft further comprises indication means, which indication means cooperates with at least one detector, which detector is placed at the common printed board. In this way it is possible to achieve an effective feedback of the actual position of a damper. The damper opening is important in a HVAC (Heating, Ventilation and Air Conditioning.) systems for minimizing power loss. The common ventilator speed is reduced until one damper in the system is close to its full opening, hereby is the power loss in the HVAC system minimized. By a further preferred embodiment for the invention can the damper be formed as a linear movable damper, which linear movable damper comprises at least one toothed bar, which toothed bar is by one or more tooth wheels activating indicator means, which indication means cooperates with at least one detector, which detector is placed at the common printed board. In some situations where for example there is less room for a damper can a linear damper be used instead of a damper that is rotated around a shaft. In that way by for example a tooth in combination with one or more tooth wheels can be used for position detection. Position detection is by magnetic technology.

By a further preferred embodiment for the invention can the transducers be placed in transducer housing, which transducer housing is placed in an opening in a transducer foot, which transducer foot is placed in an opening in a duct, which transducer foot has an outer shape that follows openings in duct having different diameters. Forming a standard foot having sufficient height of the foot it is possible that this foot could be used in ducts having different diameters. Maybe starting by a flat surface and accepting into a relative small diameter for a duct the same transducer foot could be possible. This transducer foot will probably be moulded in a rather flexible material so that the transducer foot will be able to more or less be air tight when it is filling out the opening.

By a further preferred embodiment for the invention can the transducer foot comprise at least one first protrusion for interacting with the inner surface of the duct, which transduce foot further comprises a second protrusion for interacting with the outer surface of the duct, which second protrusion comprises at least one fastening means for fastening the transducer foot to the duct. Hereby can be achieved that a fast and effective fixation of the transducer foot into a hole in a duct is performed in a rather effective way. The fastening means could be as primitive as a pop rivet or maybe a screw. Other possibilities for fastening are also possible.

By a further preferred embodiment for the invention can the transducer be paced inside the transducer foot, which transducer food is moulded partly around the transducer by low pressure moulding. In that way it is possible that the transducer foot is moulded around the transducer. This will be a highly effective way of producing two different foots for transducers, one to each side of a duct. The duct as such can be pre-produced having the cut outs for the transducer foots.

By a further preferred embodiment for the invention can the damper position detection means be formed by a Wheatstone bridge, which Wheatstone bridge comprises at least two magneto resistive resistors placed perpendicular to each other for detecting the position of a magnet, which magnet follows the position of the damper. The use of Wheatstone bridge gives the possibility that a rather effective measurement can be performed of the position of a magnet. In one situation it can be achieved that one of the signals is used as a sinus signal where the other signal is used as a cosine signal. In that way can be achieved that normal triangulation can be used which is effective and easily achieved in a processor to find the correct position of the damper.

The same function can be achieved by Hall elements, which are likewise sensitive to the direction of the magnetic field. However there is a difference between the two methods in that the magneto resistive is sensitive to the magnetic field direction, but not on the polarity. Hence for one full rotation of the damper will result in two full cycles of the sine and cosine functions whereas the Hall devices will give only one cycle pr revolution. Choice of technology here is a matter of cost since both methods do function equally well.

The pending patent application also concerns use of a system as disclosed previously whereby the system is used to control inlet of air into rooms, which inlet air is used for air condition or heating of the room.

Hereby can a high effectively air condition or heating system be achieved where each single air inlet is controlled by both the measurement of the flow and a regulation damper. Hereby can the correct air flow be achieved through every single air inlet in large building systems. It is further possible that each of the inlet control systems is communicating with a master control system so that set points could be generated centrally. In that way can be achieved that air for air condition or heating can be centrally regulated and in that way adjusted into the actual situation and the actual request for fresh air. This can lead to rather big savings in energy consumption in larger buildings.

*Blade dampers*

Has a turning, circular blade. The blade is steeples adjustable 0-90°. The dampers can be manually adjusted or motor driven. Here only the motor driven damper is considered. The combined controller, motor, gear, flow meter, position monitor and damper can be placed on top of the blade damper. A magnet on the shaft shall give the blade angle to a magnetic sensor placed on the circuit board adjacent to the microcontroller. Therefore the shaft must go all the way through the gear so the magnet can be placed on top of the blade axle just under the circuit board. The position sensor is a pair of magneto resistive sensors capable to give a voltage proportional to the field strength in the sensor direction. By having two sensors orthogonal to each other the angle can be calculated and the opening determined. It is preferred to have motor, gear, circuit board with controller and sensors all placed in the same capsule. The noise from the gear shall be low, under 25 dBA in 1m distance from the damper. It means that the motor shall be rather slow running and the first gear wheels may be in PA or there must be other means for preventing noise. The blade must turn one quarter of a revolution in 150 seconds or 0.1 revolutions per minute. Output torque shall be minimum 5 Nm.

*Box damper*

The regulation can be performed by a piston which can move back and forth in the perforated tube creating more or less resistance to the airflow. The setting in the shown box is actually done by pulling in strings connected to the piston until the flow is as desired. When the condition in the ventilation changes. A door or a window is opened or more people are in the room it is desired that the ventilation is changed accordingly. A controller keeping the flow either constant or changed after demand shall be applied to the existent box. In order to make the setting variable after demand a flow meter combined with an electric motor shall be mounted to set the position of the piston. If the flow is under demand the piston is moved toward the centre of the box activating more holes in the perforated tubes. Opposite if higher than demand the piston is moved away from the centre. It is preferred to have a spindle, inside the perforated tube, fitting a nut in the centre of the piston. The piston includes means for preventing it from turning. The spindle and nut will have threads with elevation 1.25 mm per revolution. The velocity of the piston shall be 1 mm per second. Hence the turning rate of the spindle shall be 48 revolutions per minute. The friction of bearings and piston shall be kept low because of the low power of the motor. The position of the piston shall be measured by the controlling electronic.

**Description of the Drawings**

Fig. 1     discloses a possible embodiment for a combined measurement and regulation system.
Fig. 2     shows an alternative embodiment for a combined regulation and measurement device.
Fig. 3     discloses a transducer placed in a transducer fixture.
Fig. 4     shows a possible embodiment for a transducer foot.
Fig. 5     shows section of ducts 104, 104a with different diameters.
Fig. 6     discloses an alternative embodiment for a transducer foot and its fixation to a duct.
Fig. 7     shows a possible embodiment for the invention used with a box damper.

Fig. 8    shows same embodiment as fig. 7, but seen from a different end.
Fig. 9    shows a sectional view of the embodiment as shown at fig. 7 or 8.
Fig. 10    shows an alternative embodiment for the invention, where traditional flow regulation is indicated.
Fig. 11    shows a possible embodiment for a control device.

## Detailed Description of the Invention

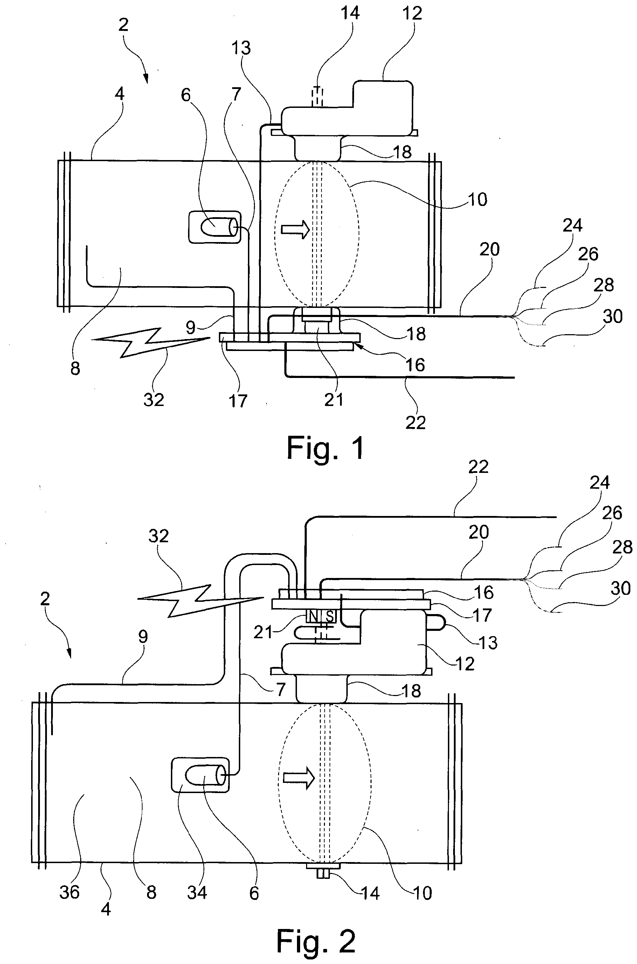

Fig. 1 discloses a possible embodiment for a system 2 comprising a duct 4 in which duct ultrasound transducers 6, 8 are generating beams of ultrasound between the transducers. The transducers 6, 8 are connecting by wiring 7, 9 towards a common printed circuit board 17. The system 2 further comprises a damper 10, which by a shaft 14 can be rotated by a servo motor 12, which servo motor 12 is connected by wiring 13 to the printed circuit board 17. The servo motor is placed on a cup 18 to allow space for insulation of the duct 4. Further is indicated that magnetic means 21are fastened to the shaft 14 and placed very near the printed circuit board so that magnetic detection means are able to detect the position of the damper 10. Further is indicated the electronic circuit 16, which is mounted at the printed board 17. This electronic circuit 16 is connected by a communication line 22, which for example could be RS485 MODBUS. Further is indicated a connection wiring 20 comprising single wirings 24 which is a power connection to a 24 volt AC supply where the line 26 indicates the position of the damper which could be performed as an analog voltage between 2-10 volt. Further is the line 28 indicating a set point for the air flow which also is communicated as an analog value between 2-10 volt. The line 30 is indicating a ground connection. Further is indicated wireless communication 32 which in a possible embodiment for the invention is an 868 MHz radio communication line. In operation will the system 2 be able to measure the actual flow in the duct 4 by the ultrasonic transducers 6, 8. The electronic circuit 16 placed at the common printed board 17 performs the total analysis of the difference in transmission period from one transducer to the other and reverse transmission. This delay time and difference in delay times is necessary for indicating the flow. Probably is from outside received an indication about the wanted flow in the duct 4 and the system is therefore automatically adjusting the damper 10 by the servo motor 12 onto a flow that is as close as possible to the wanted set point.

Fig. 2 discloses an alternative embodiment which only differences is that the electronic circuit 16 placed at circuit board 17 is now placed at the same side of the duct as the servo motor 12. Further is indicated that magnetic means 21are fastened to the shaft 14 and placed very near the printed circuit board so that magnetic detection means are able to detect the position of the damper 10.

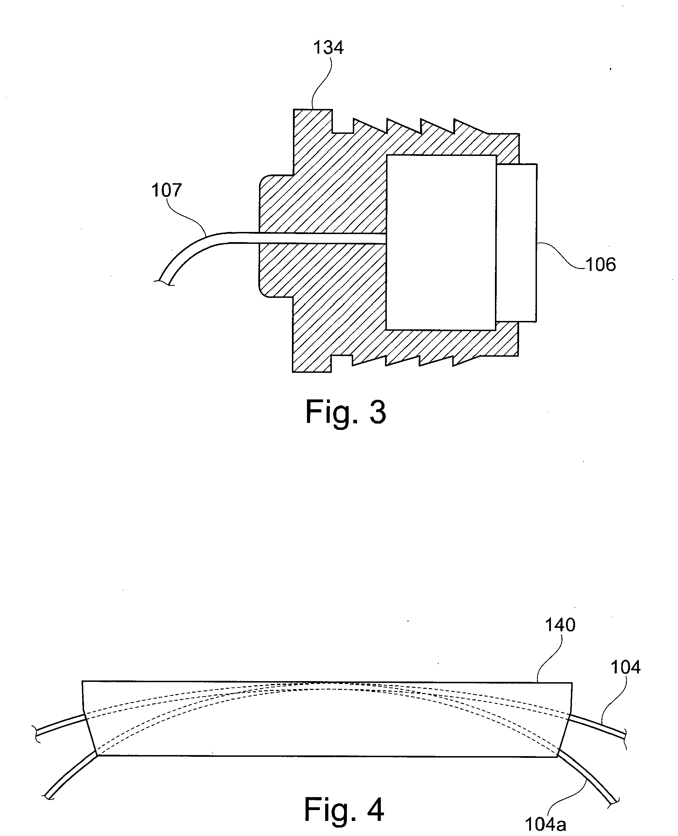

Fig. 3 discloses a possible invention for fixation of a transducer 106 in the fastening means 134. Further is indicated the wiring 107. The fastening means 134 is probably formed in a soft material so that the fixture 134 can be placed in an opening in a duct and the outer form of the soft material is formed so it is difficult to remove the fixture. Using a soft material for fixation of an ultrasound transducer 106 gives the benefit that mechanical vibrations are widely damped in the soft fixture 134 and in that way not further transmitted into the duct where ultrasonic mechanical vibrations can be transmitted towards the other transducer 108 and in that way interfere with the received signal which makes precise measurement impossible.

Fig. 4 shows a possible embodiment for a transducer foot 140 which is adapted to be used in ducts 104, 104a with different diameters. By a very special calculation of the changes in the size of an opening, where the openings are made in the duct before the duct is formed into a tube, where the opening is performed probably by punching while the material is a flat plate. Therefore the afterwards bending of the duct will give some differences in the actual size of the opening in the duct. By forming the transducer foot in a relative soft material and performing the correct size of the transducer foot, same foot can be used to different diameters of a duct maybe starting from a flat surface at a duct into a number of different diameters for the duct.

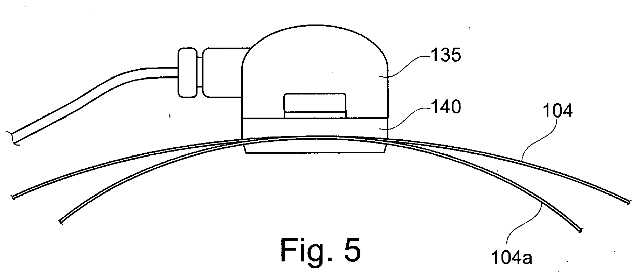

Fig. 5 shows section of ducts 104, 104a with different diameters. A transducer housing 135 with a transducer foot 140 is placed in opening in the ducts 104, 104a.

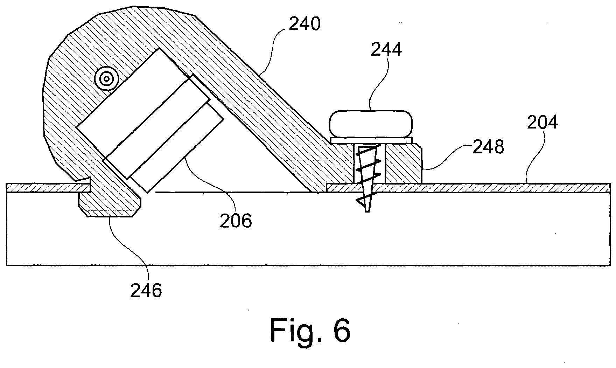

Fig. 6 shows a possible embodiment for the invention where a duct 204 comprises a media, for example air, where the velocity has to be measured by a pair of ultrasound transducers such as 206, which transducer 206 is placed in a transducer foot 240. This transducer foot 204 comprises a first protrusion 246 which is performing an inner fixation of the transducer foot 240. Further is indicated a protrusion 248 which is placed at the outer side of the duct 204. The protrusion 248 comprises fastening means 244 such as screw or maybe pop rivet Other kinds of fastening means could also be used. Probably is the transducer foot 240 formed of a relative soft melt material which is isolating the mechanical vibrations generated by the transducers 206.

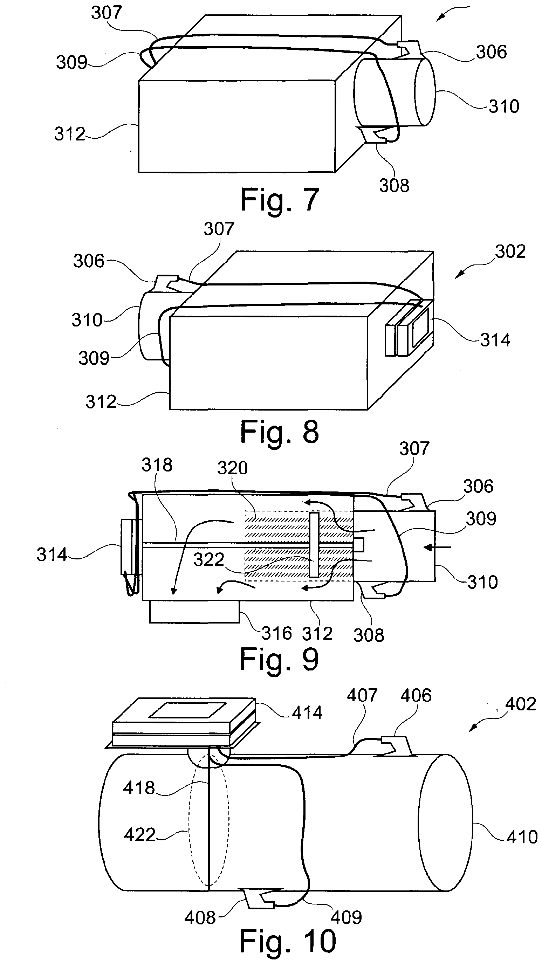

Fig. 7 shows a box damper 302, which box damper in combination with an inlet 310 indicates ultrasound transducers 306 and 308. Communication lines 307, 309 are leading to a control device (not shown). The box itself is indicated as 312.

Fig. 8 shows same embodiment as at fig. 7, but seen from the opposite end. The inlet 310 together with one of the transducers 306 can be seen together with the two communication lines 307 and 309, which are connected to an electronic control device 314. This electronic control device 314 takes care of the calculation of the flow based on signals from the ultrasound transducers 306,308 and also for regulation of actual flow through the box 312.

Fig. 9 shows a sectional view of same embodiment as indicated at fig. 7. Fig. 9 shows the two ultrasound transducers 306, 308 and the two communication lines 307 and 309. Further is indicated the inlet 310 into the box 312, which box has an outlet 316. The electronic device 314 comprises an electro motor, which motor is rotating a spindle 318 which spindle 318 is moving a piston 322 linearly inside a perforated tube 320 hereby regulating the flow of air through the box 312.

Fig. 10 shows an alternative embodiment for a blade damper. A tube 402 has an inlet 410. This tube comprises ultrasound transducers 406 and 408. These transducers are connected by wiring 407 and 409 towards the control box 414. This control box is able to rotate a spindle 418 to which spindle blade 422 is fixed. In that way a spindle 418 can regulate the flow through the tube.

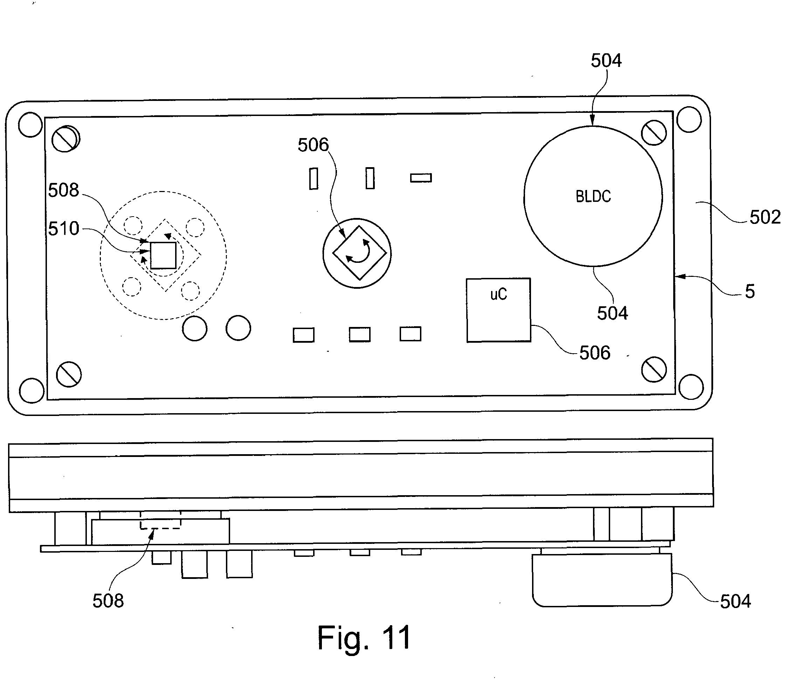

Fig. 11 shows the electronic control box 502 comprising a motor unit 504 in which a gear box (not shown) is driving a first spindle 506 for a box damper regulation indicating one further spindle 508 for a blade damper, which further comprises magnets 510 for position sensors. Further is indicated at for example a printed circuit board, a micro-processor 506 together with a plurality of other electronic components. The micro-processor controls the rotation of the motor 504 and receives input from sensors 510 and from not shown ultrasound transducers. In that way one common control circuit can be used for as well regulation of a damper and in the same way measuring actual flow through a tube. Further is achieved that the same electronic control device can be used for two different types of dampers. Fast rotating spindle 506 is more or less directly coupled to the motor 504, but a rather complicated gearing, probably comprising several gear wheels, are necessary to reach the very slow rotating shaft 508 for blade damping.

## Claims

1. System (2) for control of a flow of a media in a duct (4, 104, 104a), which duct comprises means for flow measurement (6, 8), which duct comprises means for flow regulation (10), which system (2) comprises a control system (16), which control system (16) is configured to receive at least input from the flow measurement means (6, 8), which control system (16) is configured to perform control of at least one regulation damper (10), wherein the flow measurement and the damper (10) control are performed by a common control system (16), which control system (16) comprises at least one common printed circuit board (17), which printed circuit board (17) comprises at least one processor, **characterized in that** the printed circuit board (17) further comprises magnetic position detection means for detecting the actual position of the damper (10) by means of at least one magnet (21) on the damper, with the magnetic position detection means being placed on the printed circuit board (17).

2. System according to claim 1, **characterized in that** the means for flow measurement comprises at least a pair of ultrasound transducers (6, 8) for generating at least one path of ultrasound partly in the flow direction and partly against the flow direction in duct (4, 104, 104a).

3. System according to claim 2, **characterized in that** the ultra sound transducers (6,8) are connected to a transmitter circuit and to a receiver circuit, which receiver circuit comprises at least an anti aliasing filter, which anti aliasing filter is further connected to a microcontroller, which microcontroller comprises either internally or externally an analogue to digital converter, which digital converter is configured to convert the analogue signal into digital data samples representing at least transit times and time difference, which microcontroller is configured to store the data samples in a memory, whereby a transmitter circuit and a receiver circuit are controlled by a switch, which switch is configured to perform continuous switching of transmitter circuit into a receiver circuit and the receiver circuit into a transmitter circuit, which microcontroller is configured to store a vector of data sample for each direction of transmission, which vector comprises an appropriate number of N samples forming a frame, which microcontroller is configured to multiply each value of the frame which a complex number with fixed magnitude and a phase representing the transmitted frequency corresponding to the transmitted signal:

$$Y_n = X_n \cdot e^{-j\omega \cdot t_s \cdot n} = X_n \cdot (\cos(\omega \cdot t_s \cdot n) + j \sin(\omega \cdot t_s \cdot n))$$

where $X_n$ is the stored value at the $n^{th}$ location, $jw$ the angular frequency of the transmitted signal, $t_s$ is the sampling time interval and $n$ is the sample number $0 \leq n < N$, which microprocessor is configured to generate imaginary values and a real values, which imaginary values and real values are low pass filtrated in a digital filter, which filtrated values are sent to an amplitude function and to a phase detection function, which microcontroller based on the result of the amplitude function and the result of the phase detection function is configured to calculate the flow in the duct.

4.  System according to claim 1, **characterized in that** the magnetic position detection means for detecting the actual position of the damper (10) is achieved by a rotatable shaft (14) carrying the damper (10), which shaft further comprises indication means being the magnet, which magnet is configured to cooperate with the magnetic position detection means placed on the printed circuit board (17).

5.  System according to claim 1, **characterized in that** the damper (10) is formed as a linear movable damper, which linear movable damper comprises at least one toothed bar, which toothed bar is by one or more tooth wheels activating indicator means, which indication means is configured to cooperate with the magnetic position detection means placed on the printed circuit board (17).

6.  System according to claim 1 or 5, **characterized in that** the damper is formed as box damper, which box damper comprises at least one perforated tube, in which perforated tube a piston is moved by a linear actuator formed by a rotating spindle.

7.  System according to claim 3, **characterized in that** the transducers (6, 8) are placed in a transducer housing (134, 240) with a transducer foot (140, 240), which transducer foot (140, 240) comprises an opening in which a transducer (6, 8) is placed, which transducer foot (140, 240) is placed in an opening in a duct (4, 104, 104a), which transducer foot (140, 240) has an outer shape that follows openings in duct (4, 104, 104a) having different diameters.

8.  System according to claim 7, **characterized in that** the transducer foot (240) comprises at least one first protrusion (246) for interacting with the inner surface of the duct (204), which transducer foot (240) further comprises a second protrusion (248) for interacting with the outer surface of the duct (204), which second protrusion (248) comprises at least one fastening means (244) for fastening the transducer foot (240) to the duct (204).

9.  System according to claim 7 or 8, **characterized in that** the transducer (206) is placed inside the transducer foot (240), which transducer foot (240) is moulded partly around the transducer (206) by low pressure moulding.

10. System according to one of the claims 1 - 9, **characterized in that** the damper magnetic position detection means is formed by a Wheatstone bridge, which Wheatstone bridge comprises at least two magneto resistive resistors placed perpendicular to each other for detecting the position of a magnet, which magnet follows the position of the damper (10).

11. System according to one of the claims 1 - 9, **characterized in that** the damper magnetic position detection means is formed by two hall sensors placed perpendicular to each other for detecting the position of a magnet, which magnet follows the position of the damper (10).

12. Use of a system (2) as disclosed in one of the claims 1 - 11, **characterized in that** the system (2) is used to control inlet of air into rooms of buildings, which inlet air is used for air condition or heating of the room in a building.


**Patentansprüche**

1.  System (2) zur Steuerung einer Strömung eines Mediums in einem Kanal (4, 104, 104A), welcher Kanal Mittel zur Strömungsmessung (6, 8) umfasst, welcher Kanal Mittel zur Strömungsregelung (10) umfasst, welches System (2) ein Steuersystem (16) umfasst, welches Steuersystem (16) dazu ausgelegt ist, zumindest eine Eingabe von dem Strömungsmessmittel (6, 8) zu empfangen, welches Steuersystem (16) dazu ausgelegt ist, eine Steuerung mindestens eines Regeldämpfers (10) durchzuführen, wobei die Strömungsmessung und die Dämpfer-(10)-Steuerung von einem gemeinsamen Steuersystem (16) durchgeführt werden, welches Steuersystem (16) mindestens eine gemeinsame Leiterplatte (17) umfasst, welche Leiterplatte (17) mindestens einen Prozessor umfasst, **dadurch gekennzeichnet, dass** die Leiterplatte (17) ferner ein magnetisches Positionserfassungsmittel zur Erfassung der aktuellen Position des Dämpfers (10) mittels mindestens eines Magneten (21) am Dämpfer umfasst, wobei das magnetische Positionserfassungsmittel auf der Leiterplatte (17) angeordnet ist.

2.  System nach Anspruch 1, **dadurch gekennzeichnet, dass** das Mittel zur Strömungsmessung mindestens ein Paar von Ultraschallwandlern (6, 8) zur Erzeugung mindestens eines Ultraschallweges teilweise in der Strömungsrichtung und teilweise entgegen der Strömungsrichtung im Kanal (4, 104, 104a) umfasst.

3.  System nach Anspruch 2, **dadurch gekennzeichnet, dass** die Ultraschallwandler (6,8) mit einer Senderschaltung und mit einer Empfängerschaltung verbunden sind, welche Empfängerschaltung mindestens ein Anti-Aliasing-Filter umfasst, welches Anti-Aliasing-Filter außerdem mit einem Mikrocontroller verbunden ist, welcher Mikrocontroller entweder intern oder extern einen Anälog-Digital-Wandler umfasst, welcher Digital-Wandler zur Umwandlung des analogen Signals in digitale Datenproben, die zumindest Laufzeiten und Zeitdifferenz darstellen, ausgelegt ist, welcher Mikrocontroller dazu ausgelegt ist, die Datenproben in einem Speicher zu speichern, wobei eine Senderschaltung und eine Empfängerschaltung durch einen Schalter gesteuert werden, welcher Schalter dazu ausgelegt ist, eine kontinuierliche Umschaltung der Senderschaltung in eine Empfängerschaltung und die Empfängerschaltung in eine Senderschaltung durchzuführen, welcher Mikrocontroller dazu ausgelegt ist, einen Vektor einer Datenprobe für jede Übertragungsrichtung zu speichern, welcher Vektor eine geeignete Anzahl von einen Rahmen bildenden N-Proben umfasst, welcher Mikrocontroller dazu ausgelegt ist, jeden Wert des Rahmens mit einer komplexen Zahl mit fester Größe und einer Phase zu multiplizieren, die übertragene Frequenz darstellend, die dem übertragenen Signal entspricht:

$$Y_n = X_n \cdot e^{-j\omega \cdot t_s \cdot n} = X_n \cdot (\cos(\omega \cdot t_s \cdot n) + j\sin(\omega \cdot t_s \cdot n))$$

wobei $X_n$ der gespeicherte Wert am n-ten Ort ist, $j\omega$ die Winkelfrequenz des übertragenen Signals ist, $t_s$ das Abtastzeitintervall ist, und $n$ die Abtastzahl $0 \leq n < N$ ist, welcher Mikroprozessor dazu ausgelegt ist, imaginäre Werte und Realwerte zu erzeugen, welche imaginären Werte und Realwerte in einem digitalen Filter tiefpassgefiltert werden, welche Filtratwerte an eine Amplitudenfunktion und an eine Phasenerfassungsfunktion gesendet werden, welcher Mikrocontroller basierend auf dem Ergebnis der Amplitudenfunktion und dem Ergebnis der Phasenerfassungsfunktion zur Berechnung der Strömung in dem Kanal ausgelegt ist.

4. System nach Anspruch 1, **dadurch gekennzeichnet, dass** das magnetische Positionserfassungsmittel zum Erfassen der aktuellen Position des Dämpfers (10) durch eine den Dämpfer (10) tragende drehbare Welle (14) erreicht wird, welche Welle ferner ein Anzeigemittel umfasst, das der Magnet ist, welcher Magnet zum Zusammenwirken mit dem auf der Leiterplatte (17) angeordneten magnetischen Positionserfassungsmittel ausgelegt ist.

5. System nach Anspruch 1, **dadurch gekennzeichnet, dass** der Dämpfer (10) als linearer beweglicher Dämpfer ausgebildet ist, welcher lineare bewegliche Dämpfer mindestens eine Zahnstange umfasst, welche Zahnstange durch ein oder mehrere Zahnräder aktivierendes Anzeigemittel ist, welches Anzeigemittel zum Zusammenwirken mit dem auf der Leiterplatte (17) angeordneten magnetischen Positionserfassungsmittel ausgelegt ist.

6. System nach Anspruch 1 oder 5, **dadurch gekennzeichnet, dass** der Dämpfer als Kastendämpfer ausgebildet ist, welcher Kastendämpfer mindestens ein Lochrohr umfasst, in welchem Lochrohr ein Kolben durch einen durch eine rotierende Spindel gebildeten Linearaktor bewegt wird.

7. System nach Anspruch 3, **dadurch gekennzeichnet, dass** die Wandler (6, 8) in einem Wandlergehäuse (134, 240) mit einem Wandlerfuß (140, 240) untergebracht sind, welcher Wandlerfuß (140, 240) eine Öffnung umfasst, in welcher ein Wandler (6, 8) angeordnet ist, welcher Wandlerfuß (140, 240) in einer Öffnung in einem Kanal (4, 104, 104a) angeordnet ist, welcher Wandlerfuß (140, 240) eine Außenform aufweist, die Öffnungen in dem Kanal (4, 104, 104a) mit unterschiedlichen Durchmessern folgt.

8. System nach Anspruch 7, **dadurch gekennzeichnet, dass** der Wandlerfuß (240) zumindest einen ersten Vorsprung (246) zum Zusammenwirken mit der Innenfläche des Kanals (204) umfasst, welcher Wandlerfuß (240) ferner einen zweiten Vorsprung (248) zum Zusammenwirken mit der Außenfläche des Kanals (204) umfasst, welcher zweite Vorsprung (248) zumindest ein Befestigungsmittel (244) zur Befestigung des Wandlerfußes (240) an dem Kanal (204) umfasst.

9. System nach Anspruch 7 oder 8, **dadurch gekennzeichnet, dass** der Wandler (206) innerhalb des Wandlerfußes (240) angeordnet ist, welcher Wandlerfuß (240) teilweise um den Wandler (206) durch Niederdruckformen geformt ist.

10. System nach einem der Ansprüche 1 - 9, **dadurch gekennzeichnet, dass** das magnetische Dämpferpositionserfassungsmittel durch eine Wheatstone-Brücke gebildet ist, welche Wheatstone-Brücke mindestens zwei senkrecht zueinander angeordnete magnetoresistive Widerstände zur Erfassung der Position eines Magneten umfasst, welcher Magnet der Position des Dämpfers (10) folgt.

**11.** System nach einem der Ansprüche 1 - 9, **dadurch gekennzeichnet, dass** das magnetische Dämpferpositionserfassungsmittel durch zwei senkrecht zueinander angeordnete Hall-Sensoren zur Erfassung der Position eines Magneten gebildet ist, welcher Magnet der Position des Dämpfers (10) folgt.

**12.** Verwendung eines Systems (2) nach einem der Ansprüche 1 - 11, **dadurch gekennzeichnet, dass** das System (2) zur Steuerung des Einlasses von Luft in Räume von Gebäuden verwendet wird, welche Einlassluft zur Klimatisierung oder Erwärmung des Raumes in einem Gebäude verwendet wird.

**Revendications**

**1.** Système (2) pour la commande d'un écoulement d'un milieu dans un conduit (4, 104, 104a), ledit conduit comprenant un moyen de mesure d'écoulement (6, 8), ledit conduit comprenant des moyens de régulation de débit (10), ledit système (2) comprenant un système de commande (16), ledit système de commande (16) étant configuré pour recevoir au moins une entrée provenant du moyen de mesure d'écoulement (6, 8), ledit système de commande (16) étant configuré pour effectuer la commande d'au moins un amortisseur de régulation (10), la mesure d'écoulement et la commande d'amortisseur (10) étant réalisées par un système de commande commun (16), ledit système de commande (16) comprenant au moins une carte de circuit imprimé commune (17), ladite carte de circuit imprimé (17) comprenant au moins un processeur, **caractérisé en ce que** la carte de circuit imprimé (17) comprend en outre un moyen de détection de position magnétique pour détecter la position réelle de l'amortisseur (10) au moyen d'au moins un aimant (21) sur l'amortisseur, le moyen de détection de position magnétique étant placé sur la carte de circuit imprimé (17).

**2.** Système selon la revendication 1, **caractérisé en ce que** le moyen de mesure d'écoulement comprend au moins une paire de transducteurs ultrasonores (6, 8) pour générer au moins un trajet d'ultrasons d'une part dans la direction d'écoulement et d'autre part contre la direction d'écoulement dans le conduit (4, 104, 104a).

**3.** Système selon la revendication 2, **caractérisé en ce que** les transducteurs ultrasonores (6,8) sont connectés à un circuit de transmission et à un circuit de réception, ledit circuit de réception comprenant au moins un filtre anti-repliement, ledit filtre anti-repliement étant en outre connecté à un microcontrôleur, ledit microcontrôleur comprenant un convertisseur analogique-numérique, soit à l'intérieur soit à l'extérieur, ledit convertisseur numérique étant configuré pour convertir le signal analogique en échantillons de données numériques représentant au moins des temps de transit et une différence temporelle, ledit microcontrôleur étant configuré pour noter les échantillons de données dans une mémoire, dans lequel un circuit de transmission et un circuit de réception sont commandés par un commutateur, ledit commutateur étant configuré pour effectuer une commutation continue du circuit de transmission dans un circuit de réception et le circuit de réception dans un circuit de transmission, ledit microcontrôleur étant configuré pour stocker un vecteur d'échantillon de données pour chaque direction de transmission, ledit vecteur comprénant un nombre approprié de N échantillons formant une trame, ledit microcontrôleur étant configuré pour multiplier chaque valeur de la trame avec un nombre complexe avec une amplitude fixe et une phase représentant la fréquence transmise correspondant au signal transmis :

$$Y_n = X_n \cdot e^{-j\omega \cdot t_s \cdot n} = X_n \cdot (\cos(\omega \cdot t_s \cdot n) + j \sin(\omega \cdot t_s \cdot n))$$

dans lequel $X_n$ est la valeur stockée au n$^{\text{eme}}$ emplacement, $j\omega$ la fréquence angulaire du signal transmis, $t_s$ est l'intervalle de temps d'échantillonnage et $n$ est le nombre d'échantillons $0 \leq n < N$, ledit microprocesseur étant configuré pour générer des valeurs imaginaires et des valeurs réelles, lesdites valeurs imaginaires et valeurs réelles étant filtrées passe-bas dans un filtre numérique, lesdites valeurs filtrées étant envoyées à une fonction d'amplitude et à une fonction de détection de phase, ledit microcontrôleur étant basé sur le résultat de la fonction d'amplitude et le résultat de la fonction de détection de phase étant configuré pour calculer le débit dans le conduit.

**4.** Système selon la revendication 1, **caractérisé en ce que** le moyen de détection de position magnétique pour détecter la position réelle de l'amortisseur (10) est obtenu par un arbre rotatif (14) portant l'amortisseur (10), ledit arbre comprenant en outre un moyen d'indication étant l'aimant, ledit aimant étant conçu pour coopérer avec le moyen de détection de position magnétique placé sur la carte de circuit imprimé (17).

**5.** Système selon la revendication 1, **caractérisé en ce que** l'amortisseur (10) est formé en tant qu'amortisseur mobile linéaire, ledit amortisseur mobile linéaire comprenant au moins une barre dentée, ladite barre dentée étant à l'un ou plusieurs moyens indicateurs d'activation de roues dentées, ledit moyen d'indication étant configuré pour coopérer avec le moyen de détection de position magnétique placé sur la carte de circuit imprimé (17).

6. Système selon la revendication 1 ou 5, **caractérisé en ce que** l'amortisseur est formé en tant qu'amortisseur de boîte, ledit amortisseur de boîte comprenant au moins un tube perforé, tube perforé dans lequel un piston est déplacé par un actionneur linéaire formé par une broche rotative.

7. Système selon la revendication 3, **caractérisé en ce que** les transducteurs (6, 8) sont placés dans un boîtier de transducteur (134, 240) avec un pied de transducteur (140, 240), ledit pied de transducteur (140, 240) comprenant une ouverture dans laquelle un transducteur (6, 8) est placé, ledit pied de transducteur (140, 240) étant placé dans une ouverture dans un conduit (4, 104, 104a), ledit pied de transducteur (140, 240) ayant une forme extérieur qui suit des ouvertures dans le conduit (4, 104, 104a) ayant différents diamètres.

8. Système selon la revendication 7, **caractérisé en ce que** le pied de transducteur (240) comprend au moins une première saillie (246) pour interagir avec la surface intérieure du conduit (204), ledit pied de transducteur (240) comprenant en outre une deuxième saillie (248) pour interagir avec la surface extérieure du conduit (204), ladite deuxième saillie (248) comprenant au moins un moyen de fixation (244) pour fixer le pied de transducteur (240) aux diamètres de conduit (204).

9. Système selon la revendication 7 ou 8, **caractérisé en ce que** le transducteur (206) est placé à l'intérieur du pied de transducteur (240), ledit pied de transducteur (240) est moulé en partie autour du transducteur (206) par moulage basse pression.

10. Système selon l'une des revendications 1 à 9, **caractérisé en ce que** le moyen de détection de position magnétique d'amortisseur est formé par un Pont de Wheatstone, ledit Pont de Wheatstone comprenant au moins deux résistances magnéto-résistives placées perpendiculairement l'une à l'autre pour détecter la position d'un aimant, ledit aimant suivant la position de l'amortisseur (10).

11. Système selon l'une des revendications 1 à 9, **caractérisé en ce que** le moyen de détection de position magnétique d'amortisseur est formé par deux capteurs à effet hall placés perpendiculairement l'un par rapport à l'autre pour détecter la position d'un aimant, ledit aimant suivant la position de l'amortisseur (10).

12. Utilisation d'un système (2) selon l'une des revendications 1 à 11, **caractérisé en ce que** le système (2) est utilisé pour commander l'entrée d'air dans des pièces de bâtiments, ledit air d'entrée étant utilisé pour la climatisation ou le chauffage de la pièce dans un bâtiment.

Fig. 1

Fig. 2

134

107

106

Fig. 3

140

104

104a

Fig. 4

135

140

104

104a

Fig. 5

Fig. 6

Fig. 7

Fig. 8

Fig. 9

Fig. 10

Fig. 11

**REFERENCES CITED IN THE DESCRIPTION**

**Patent documents cited in the description**

- DK 201270241

- DE 10001165 A1